# DEMANDE DE BREVET EUROPEEN

(11) **EP 1 568 517 A1**
(43) Date de publication de la demande: **31.08.2005**
(21) Numéro de dépôt: 05290414.1
(22) Date de dépôt: 23.02.2005
(51) Int. Cl.: B60C 23/04, C09J 163/00, C09J 109/00, C09J 5/04

(54) **Utilisation d'une colle pour assembler un organe et une roue, ensemble dun organe et une roue, organe et roue**

(30) Priorité: 27.02.2004 FR 0402045
(71) Demandeur: Société de Technologie Michelin, 63000 Clermont-Ferrand (FR); MICHELIN RECHERCHE ET TECHNIQUE S.A., CH-1763 Granges-Paccot (CH); TRW Automotive U.S. LLC, Farmington Hills, MI 48335 (US)
(72) Inventeur: Fahas, Salima, 63200 Mozac (FR); Leymin, Frédéric, 63000 Clermont-Ferrand (FR)
(74) Mandataire: Remy, Vincent Noel Paul

(57) **Abrégé**

L'invention concerne une utilisation d'une colle (20) pour assembler un organe (16) et une roue (12), la colle présentant les propriétés suivantes :
- la contrainte de rupture en traction de la colle est supérieure à 0,5 MPa à 80 °C ;
- la colle comporte au moins un constituant polymérique dont la température de transition vitreuse est inférieure à -50 °C ;
- la colle comporte au moins un autre constituant polymérique dont la température de transition vitreuse est supérieure à 100 °C.

## Description

La présente invention concerne une utilisation d'une colle pour assembler un organe et une roue, un ensemble d'un organe et d'une roue, un organe et une roue.

De plus en plus, les constructeurs automobiles équipent les roues des véhicules d'organes ayant pour fonction de fournir des informations concernant les pneumatiques à un calculateur du véhicule.

Parmi les organes possibles, on trouve par exemple des capteurs de pression, des capteurs de température ou des dispositifs d'identification des pneumatiques.

La fixation pérenne d'un organe à une roue est un problème délicat à résoudre étant donné les contraintes auxquelles est soumis l'organe. En particulier, l'organe subit de très fortes accélérations, dues notamment à la force centrifuge, et des variations de température de très grande amplitude.

On connaît, dans l'état de la technique, différents procédés permettant l'assemblage d'un capteur de pression à une roue.

Une première technique connue consiste à intégrer le capteur de pression à une valve de gonflage du pneumatique placée sur la roue. Cependant, le surpoids engendré par ce capteur de pression peut fragiliser la valve, laquelle risque ainsi de perdre peu à peu son étanchéité.

Une seconde technique connue consiste à placer le capteur de pression dans une gorge de montage de la roue et à assurer sa fixation au moyen d'un collier de serrage enserrant circonférentiellement la gorge de montage de la roue. Cependant, la force de serrage exercée par le collier diminue au cours du temps, et un jeu tend à apparaître entre le capteur de pression et la roue.

L'invention a pour but de proposer une alternative plus simple et plus efficace à ces procédés de fixation, grâce à l'utilisation d'une colle qui résiste aux différentes contraintes précitées pour assembler un organe et une roue.

A cet effet, l'invention a pour objet une utilisation d'une colle pour assembler un organe et une roue, caractérisée en ce que la colle présente les propriétés suivantes :
- la contrainte de rupture en traction de la colle est supérieure à 0,5 MPa à 80 °C ;
- la colle comporte au moins un constituant polymérique dont la température de transition vitreuse est inférieure à -50 °C.

L'invention permet donc d'assembler de manière simple, rapide et efficace un organe à une roue. Grâce aux propriétés de la colle, l'assemblage est assuré dans toutes les conditions normales d'utilisation d'une roue.

Les inventeurs ont constaté que l'utilisation d'une colle selon l'invention permettait la fixation d'un capteur de pression pesant 75 grammes sur une roue, jusqu'à une vitesse de 300 km/h pendant 2 heures, pour des températures variant de -30°C à 120°C.

La colle, grâce à son caractère visqueux, présente également l'avantage de combler les interstices qui pourraient exister entre l'organe et la roue, ce qui permet en particulier de fixer des organes de formes identiques sur des roues de différents diamètres et ainsi d'économiser les coûts engendrés par la conception, la fabrication et la gestion de plusieurs organes de dimensions différentes.

Une utilisation d'une colle selon l'invention peut en outre comporter l'une ou plusieurs des caractéristiques suivantes :
- le constituant polymérique appartient au groupe des SBR et des polybutadiènes ;
- la colle comporte au moins un autre constituant polymérique dont la température de transition vitreuse est supérieure à 100°C;
- l'autre constituant polymérique a été obtenu par condensation d'une résine époxy ;
- l'organe est assemblé sur la surface radialement externe d'une gorge de montage de la roue ;
- l'organe est choisi parmi l'un au moins des éléments de l'ensemble comprenant un émetteur, un récepteur, un capteur, un capteur de pression, un capteur de température, un support pour l'un quelconque des éléments précités ;
- l'organe est un support pour l'un quelconque des éléments précités, l'élément étant fixé au support par encliquetage ; et
- l'organe est un support pour l'un quelconque des éléments précités, le support comportant un logement destiné à recevoir l'élément par insertion selon une direction d'insertion qui est sensiblement orthoradiale lorsque le support est collé sur la roue, c'est-à-dire une direction sensiblement perpendiculaire à un rayon de la roue passant par le centre du support.

L'invention a également pour objet un ensemble d'un organe et d'une roue assemblés au moyen d'une colle, caractérisé en ce que la colle présente les propriétés suivantes :
- la contrainte de rupture en traction de la colle est supérieure à 0,5 MPa à 80 °C ;
- la colle comporte au moins un constituant polymérique dont la température de transition vitreuse est inférieure à -50 °C.

Un ensemble selon l'invention peut en outre comporter l'une ou plusieurs des caractéristiques suivantes :
- le constituant polymérique appartient au groupe des SBR et des polybutadiènes ;
- la colle comporte au moins un autre constituant polymérique dont la température de transition vitreuse est supérieure à 100 °C ;
- l'autre constituant polymérique a été obtenu par condensation d'une résine époxy ;
- l'organe est assemblé sur la surface radialement externe d'une gorge de montage de la roue ;
- l'organe est choisi parmi l'un au moins des éléments de l'ensemble comprenant un émetteur, un récepteur, un capteur, un capteur de pression, un capteur de température, un support pour l'un quelconque des éléments précités ;
- l'organe est un support pour l'un quelconque des éléments précités, l'élément étant fixé au support par encliquetage ; et
- l'organe est un support pour l'un quelconque des éléments précités, le support comportant un logement destiné à recevoir l'élément par insertion selon une direction d'insertion qui est sensiblement orthoradiale lorsque le support est collé sur la roue.

L'invention a également pour objet un organe destiné à être solidarisé à une roue, caractérisé en ce qu'il comporte une couche pré-enduite d'une colle présentant les propriétés suivantes :
- la contrainte de rupture en traction de la colle est supérieure à 0,5 MPa à 80 °C ;
- la colle comporte au moins un constituant polymérique dont la température de transition vitreuse est inférieure à -50 °C.

Un organe selon l'invention peut en outre comporter l'une ou plusieurs des caractéristiques suivantes :
- le constituant polymérique appartient au groupe des SBR et des polybutadiènes ;
- la colle comporte au moins un autre constituant polymérique dont la température de transition vitreuse est supérieure à 100 °C ;
- l'autre constituant polymérique a été obtenu par condensation d'une résine époxy ;
- l'organe est choisi parmi l'un au moins des éléments de l'ensemble comprenant un émetteur, un récepteur, un capteur, un capteur de pression, un capteur de température, un support pour l'un quelconque des éléments précités ;
- l'organe est un support pour l'un quelconque des éléments précités, l'élément étant fixé au support par encliquetage ;
- l'organe est un support pour l'un quelconque des éléments précités, le support comportant un logement destiné à recevoir l'élément par insertion selon une direction d'insertion qui est sensiblement orthoradiale lorsque le support est solidarisé à la roue ; et
- l'organe pèse entre 15 et 90 grammes.

L'invention a également pour objet une roue destinée à recevoir un organe, caractérisée en ce qu'elle comporte une couche pré-enduite d'une colle présentant les propriétés suivantes :
- la contrainte de rupture en traction de la colle est supérieure à 0,5 MPa à 80°C;
- la colle comporte au moins un constituant polymérique dont la température de transition vitreuse est inférieure à -50 °C.

Une roue selon l'invention peut en outre comporter l'une ou plusieurs des caractéristiques suivantes :
- le constituant polymérique appartient au groupe des SBR et des polybutadiènes ;
- la colle comporte au moins un autre constituant polymérique dont la température de transition vitreuse est supérieure à 100 °C ;
- l'autre constituant polymérique a été obtenu par condensation d'une résine époxy ; et
- la couche pré-enduite de colle est portée par la surface radialement externe d'une gorge de montage de la roue.

L'invention a également pour objet un procédé d'assemblage d'un ensemble comprenant une roue, un organe et un pneumatique, caractérisé en ce qu'il comprend les étapes suivantes :
- une première étape d'utilisation d'une colle pour assembler l'organe et la roue selon l'invention précédemment définie,
- une seconde étape de montage du pneumatique sur la roue munie de l'organe,
et en ce que les deux étapes sont séparées d'une durée prédéterminée, calculée de manière que la colle soit suffisamment résistante lors de la seconde étape.

Un procédé d'assemblage selon l'invention peut comporter l'une ou plusieurs des caractéristiques suivantes :
- la durée prédéterminée est comprise entre 45 et 55 secondes ; et
- on stocke temporairement la roue munie de l'organe entre les deux étapes.

L'invention sera mieux comprise à la lecture de la description qui va suivre, donnée uniquement à titre d'exemple et faite en se référant aux dessins annexés dans lesquels :
- la figure 1 est un schéma en coupe radiale d'un ensemble d'une roue et d'un organe assemblés au moyen d'une colle selon l'invention ;
- la figure 2 est un schéma en coupe longitudinale de l'ensemble représenté sur la figure 1 ;
- la figure 3 est un schéma détaillé de la figure 1 ;
- la figure 4 est un schéma d'un support destiné à être collé à une roue selon un premier mode de réalisation ;
- la figure 5 est un schéma d'un support destiné à être collé à une roue selon un second mode de réalisation.

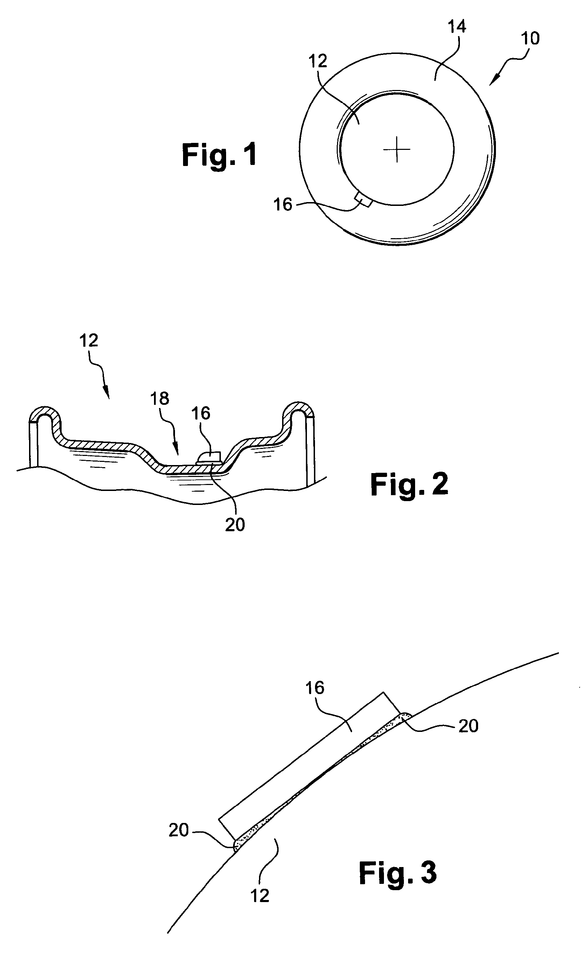

On a représenté sur la figure 1 un ensemble monté désigné par la référence générale 10 comprenant une roue 12 et un pneumatique 14.

La roue est par exemple en alliage d'aluminium moulé avec un revêtement époxy ou polyester.

Un organe 16 est fixé à la périphérie de la roue 12. Dans l'exemple décrit sur les figure 1 à 3, cet organe 16 est un capteur de pression 16 du pneumatique 14, mais l'invention peut concerner tout type d'organe, en particulier l'organe peut être un support de capteur.

Le capteur de pression 16 est positionné sur la surface radialement externe d'une gorge de montage 18 de la roue 12, comme représenté sur la figure 2.

L'assemblage du capteur de pression et de la roue est réalisé au moyen d'une couche 20 de colle présentant les propriétés suivantes :
- la contrainte de rupture en traction de la colle est supérieure à 0,5 MPa à 80 °C, de préférence supérieure à 1 MPa ;
- la colle comporte au moins un constituant polymérique dont la température de transition vitreuse est inférieure à -50 °C, de préférence inférieure à -60 °C.

Ce composant polymérique peut être un polymère appartenant au groupe des SBR ou des polybutadiènes.

On appelle température de transition vitreuse (« Tg ») d'un polymère la température où le comportement mécanique du polymère évolue d'un comportement vitreux, rigide et cassant, à un comportement caoutchoutique.

Un polymère dans son état vitreux a une très bonne résistance en traction mais une mauvaise résistance aux chocs et aux vibrations.

Un polymère dans son état caoutchoutique est résistant aux chocs et aux vibrations.

A une température normale d'utilisation, c'est-à-dire entre -30°C et 120°C, le constituant polymérique de Tg inférieure à -50°C de la colle de l'invention est dans son état caoutchoutique. La colle permet donc d'amortir les vibrations et les chocs qui apparaissent lorsque la roue est en rotation.

La résistance à la traction de la colle est obtenue au moyen d'un autre constituant polymérique dont la température de transition vitreuse est supérieure à 100°C, de préférence supérieure à 120°C, par exemple obtenu par condensation d'une résine époxy.

Cet autre constituant polymérique, qui est dans son état vitreux aux températures normales d'utilisation, assure la résistance en traction de la colle.

Pour que les propriétés des deux constituants soient conservées dans la colle, il est important que ces deux constituants ne soient pas parfaitement mélangés, c'est-à-dire que la colle ait un comportement biphasique. Pour réaliser ce mélange biphasique, la phase polymérique de température de transition vitreuse inférieure à -50°C peut être constituée par des nodules de diamètres supérieurs à 150 microns.

La colle époxy-élastomère 7240 de la société 3M vérifie les caractéristiques précitées. Les inventeurs de la présente invention ont réalisé des tests de centrifugation sur un ensemble d'une roue et d'un capteur de pression assemblés au moyen de cette colle et ils ont constaté que la colle résistait à une température initiale de 20°C à 2 heures de centrifugation à 250 km/h, suivies de 2 heures à 300 km/h, suivies de 2h à 250 km/h. Les ensembles roue-capteur assemblés ont aussi résisté à des cyclages thermiques entre -30°C et 120°C sous contrainte de centrifugation.

Le capteur de pression utilisé lors de ces tests pèse environ 75 grammes mais les capteurs couramment utilisés pèsent généralement entre 15 et 90 grammes.

On a représenté sur la figure 3 un capteur de pression 16 collé à une roue 12, le capteur ayant une section longitudinale sensiblement rectangulaire. On constate alors que la colle, grâce à sa viscosité, permet de combler les interstices qui apparaissent à cause du rayon de courbure de la roue, entre le capteur et la roue, aux extrémités du capteur. Cette propriété permet un collage d'un capteur sur des roues de différents diamètres.

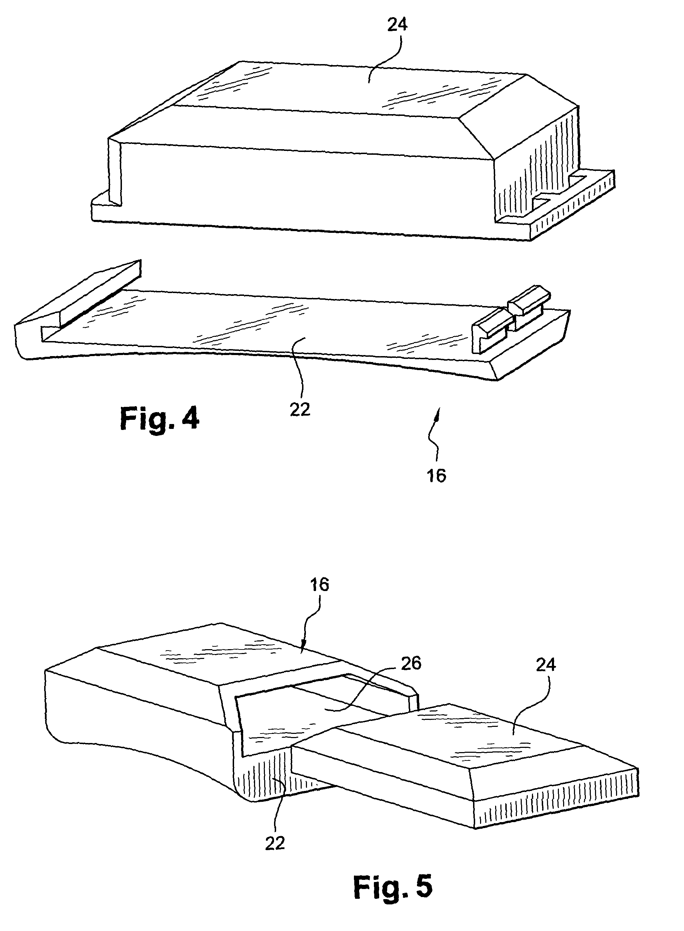

Selon une variante représentée sur les figures 4 et 5, l'organe 16, qui est fixé à la roue au moyen de la colle, est un support 22 pour un capteur 24. Le support 22 présente une courbure sensiblement égale à celle de la roue.

Selon un premier mode de réalisation du support représenté sur la figure 4, le capteur 24 est fixé au support 22 par encliquetage.

Selon un second mode de réalisation du support représenté sur la figure 5, le support 22 comprend un logement 26 destiné à recevoir le capteur 24 par insertion selon une direction d'insertion qui est sensiblement orthoradiale lorsque le support 22 est collé sur la roue. De cette manière, la fixation du capteur dans le support résiste à la force centrifuge induite par la rotation de la roue.

L'insertion du capteur 24 dans le logement se fait par exemple par glissement à l'aide de moyens de guidage conformés sur le support et le capteur.

La colle peut être appliquée entre l'organe et la roue au moment du montage ou peut être pré-enduite sur l'une ou l'autre des deux pièces à coller. Ainsi, il est possible par exemple d'enduire de colle au préalable l'organe et de protéger cette colle par un film plastique pelable.

L'assemblage de l'ensemble monté composé de la roue, du capteur et du pneumatique comporte une première étape de collage du capteur sur la roue, une seconde étape de montage du pneumatique sur la roue munie du capteur et une troisième étape de gonflage et d'équilibrage de l'ensemble monté.

La colle mettant environ 50 secondes à réticuler, il est avantageux de séparer les deux premières étapes d'une durée sensiblement égale à 50 secondes de manière que la colle résiste au montage du pneumatique et à la mise en rotation de l'ensemble monté nécessaire à l'équilibrage.

Comme le montage du pneumatique sur la roue nécessite environ 7 secondes, on stocke temporairement les roues munies du capteur entre les deux premières étapes. Ce stockage temporaire peut par exemple être réalisé au moyen d'un convoyeur transportant de 7 à 10 roues munies du capteur depuis le poste de collage jusqu'au poste de montage du pneumatique, ce convoyage durant au moins environ 50 secondes.

## Revendications

1. Utilisation d'une colle (20) pour assembler un organe (16) et une roue (12), **caractérisée en ce que** la colle présente les propriétés suivantes :
- la contrainte de rupture en traction de la colle est supérieure à 0,5 MPa à 80 °C ;
- la colle comporte au moins un constituant polymérique dont la température de transition vitreuse est inférieure à -50 °C ; et
- la colle comporte au moins un autre constituant polymérique dont la température de transition vitreuse est supérieure à 100 °C.

2. Utilisation d'une colle selon la revendication 1, dans laquelle le constituant polymérique appartient au groupe des SBR et des polybutadiènes.

3. Utilisation d'une colle selon la revendication 1 ou 2, dans laquelle l'autre constituant polymérique a été obtenu par condensation d'une résine époxy.

4. Utilisation d'une colle selon l'une quelconque des revendications 1 à 3, dans laquelle l'organe (16) est assemblé sur la surface radialement externe d'une gorge (18) de montage de la roue.

5. Utilisation d'une colle selon l'une quelconque des revendications 1 à 4, dans laquelle l'organe est choisi parmi l'un au moins des éléments de l'ensemble comprenant un émetteur, un récepteur, un capteur, un capteur de pression, un capteur de température, un support pour l'un quelconque des éléments précités.

6. Utilisation d'une colle selon la revendication 5, dans laquelle l'organe est un support pour l'un quelconque des éléments précités, l'élément étant fixé au support par encliquetage.

7. Utilisation d'une colle selon la revendication 5, dans laquelle l'organe est un support pour l'un quelconque des éléments précités, le support comportant un logement destiné à recevoir l'élément par insertion selon une direction d'insertion qui est sensiblement orthoradiale lorsque le support est collé sur la roue.

8. Ensemble d'un organe (16) et d'une roue (12) assemblés au moyen d'une colle (20), **caractérisé en ce que** la colle présente les propriétés suivantes :
- la contrainte de rupture en traction de la colle est supérieure à 0,5 MPa à 80 °C ;
- la colle comporte au moins un constituant polymérique dont la température de transition vitreuse est inférieure à -50 °C ; et
- la colle comporte au moins un autre constituant polymérique dont la température de transition vitreuse est supérieure à 100 °C.

9. Ensemble d'un organe et d'une roue selon la revendication 8, dans lequel le constituant polymérique appartient au groupe des SBR et des polybutadiènes.

10. Ensemble d'un organe et d'une roue selon la revendication 8 ou 9, dans lequel l'autre constituant polymérique a été obtenu par condensation d'une résine époxy.

11. Ensemble d'un organe et d'une roue selon l'une quelconque des revendications 8 à 10, dans lequel l'organe est assemblé sur la surface radialement externe d'une gorge de montage de la roue.

12. Ensemble d'un organe et d'une roue selon l'une quelconque des revendications 8 à 11, dans lequel l'organe est choisi parmi l'un au moins des éléments de l'ensemble comprenant un émetteur, un récepteur, un capteur, un capteur de pression, un capteur de température, un support pour l'un quelconque des éléments précités.

13. Ensemble d'un organe et d'une roue selon la revendication 12, dans lequel l'organe est un support pour l'un quelconque des éléments précités, l'élément étant fixé au support par encliquetage.

14. Ensemble d'un organe et d'une roue selon la revendication 12, dans lequel l'organe est un support pour l'un quelconque des éléments précités, le support comportant un logement destiné à recevoir l'élément par insertion selon une direction d'insertion qui est sensiblement orthoradiale lorsque le support est collé sur la roue.

15. Organe (16) destiné à être solidarisé à une roue (12), **caractérisé en ce qu'**il comporte une couche pré-enduite d'une colle présentant les propriétés suivantes :
- la contrainte de rupture en traction de la colle est supérieure à 0,5 MPa à 80°C;
- la colle comporte au moins un constituant polymérique dont la température de transition vitreuse est inférieure à -50 °C ; et
- la colle comporte au moins un autre constituant polymérique dont la température de transition vitreuse est supérieure à 100 °C.

16. Organe selon la revendication 15, dans lequel le constituant polymérique appartient au groupe des SBR et des polybutadiènes.

17. Organe selon la revendication 15 ou 16, dans lequel l'autre constituant polymérique a été obtenu par condensation d'une résine époxy.

18. Organe selon l'une quelconque des revendications 15 à 17, choisi parmi l'un au moins des éléments de l'ensemble comprenant un émetteur, un récepteur, un capteur, un capteur de pression, un capteur de température, un support pour l'un quelconque des éléments précités.

19. Organe selon la revendication 18, étant un support pour l'un quelconque des éléments précités, l'élément étant fixé au support par encliquetage.

20. Organe selon la revendication 18, étant un support pour l'un quelconque des éléments précités, le support comportant un logement destiné à recevoir l'élément par insertion selon une direction d'insertion qui est sensiblement orthoradiale lorsque le support est solidarisé à la roue.

21. Organe selon l'une quelconque des revendications 15 à 20, pesant entre 15 et 90 grammes.

22. Roue (12) destinée à recevoir un organe (16), **caractérisée en ce qu'**elle comporte une couche pré-enduite d'une colle (20) présentant les propriétés suivantes :
- la contrainte de rupture en traction de la colle est supérieure à 0,5 MPa à 80 °C;
- la colle comporte au moins un constituant polymérique dont la température de transition vitreuse est inférieure à -50 °C ; et
- la colle comporte au moins un autre constituant polymérique dont la température de transition vitreuse est supérieure à 100 °C.

23. Roue selon la revendication 22, dans laquelle le constituant polymérique appartient au groupe des SBR et des polybutadiènes.

24. Roue selon la revendication 22 ou 23, dans laquelle l'autre constituant polymérique a été obtenu par condensation d'une résine époxy.

25. Roue selon l'une quelconque des revendications 22 à 24, dans laquelle la couche pré-enduite de colle est portée par la surface radialement externe d'une gorge de montage de la roue.

26. Procédé d'assemblage d'un ensemble comprenant une roue, un organe et un pneumatique, **caractérisé en ce qu'**il comprend les étapes suivantes :
- une première étape d'utilisation d'une colle pour assembler l'organe et la roue selon l'une quelconque des revendications 1 à 7,
- une seconde étape de montage du pneumatique sur la roue munie de l'organe,
et **en ce que** les deux étapes sont séparées d'une durée prédéterminée, calculée de manière que la colle soit suffisamment résistante lors de la seconde étape.

27. Procédé d'assemblage selon la revendication 26, dans lequel la durée prédéterminée est comprise entre 45 et 55 secondes.

28. Procédé d'assemblage selon l'une quelconque des revendications 26 et 27, dans lequel on stocke temporairement la roue munie de l'organe entre les deux étapes.
